Europäisches Patentamt

**European Patent Office**

**Office européen des brevets**

(19)

(11) Publication number:

**0 204 516**

**A2**

(12)

# EUROPEAN PATENT APPLICATION

(21) Application number: **86304088.7**

(22) Date of filing: **29.05.86**

(51) Int. Cl.⁴: **G 06 K 9/48**

(30) Priority: **04.06.85 US 741313**

(43) Date of publication of application:
**10.12.86 Bulletin 86/50**

(84) Designated Contracting States:
**DE FR GB IT SE**

(71) Applicant: **ADEPT TECHNOLOGY, INC.**
**1212 Bordeaux Drive**
**Sunnyvale California 94089(US)**

(72) Inventor: **Roth, Scot D**
**17752 Nearbank Drive**
**Rowland Heights California 91748(US)**

(74) Representative: **Bayliss, Geoffrey Cyril et al,**
**BOULT, WADE & TENNANT 27 Furnival Street**
**London EC4A 1PQ(GB)**

(54) **Vision system for distinguishing touching parts.**

(57) A practical vision system for controlling the positioning of a robot arm recognises and locates objects. The vision system (20, 30) processes binary images, but recognises objects based on boundary features such as lines, arcs, corners and holes instead of "blob features" such as area and best-fit ellipse. Consequently, the vision system can process two common situations not handled by blob analysis: merged blobs due to touching or overlapping parts and incomplete blobs due to low image contrast. The microprocessor-based system is interfaced to the robot system and can recognize up to five parts per second.

FIG.—2

EP 0 204 516 A2

# VISION SYSTEM FOR DISTINGUISHING
## TOUCHING PARTS

The present invention is directed generally to the field of robot control systems and more particularly to a robot vision system capable of accurately identifying parts moving past the system on a conveyor, even if touching or overlapping.

Almost all commercially available vision systems for robots that locate randomly positioned parts are based on the SRI vision module of Gleason, G., and Agin, G., "A Modular Vision System for Sensor-Controlled Manipulation and Inspection," Proceedings, 9th International Symposium on Industrial Robots (Mar. 1979), pp. 57-70. The techniques used are well known. These systems extract "blobs" from binary images via connectivity analysis and then compare the blobs with pre-taught models in order to recognize them. Users train the systems by simply showing them examples of the objects.

Systems like the SRI vision module are efficient, but have a limited application scope. There are two major technical limitations: 1) objects must be in high contrast with the background, and 2) objects must be spatially separated, lest their images become merged into a single blob. For many applications, the high contrast requirement can be satisfied using structured light. An excellent example of the structured light technique is the Consight system which is used in conjunction with a conveyor belt described by Holland, S., Rossol, L., and Ward, M., "CONSIGHT-1: A Vision-Controlled Robot System for Transferring Parts from Belt Conveyors," Computer Vision and Sensor-Based Robots, edited by G. Dodd and L. Rossol, 1979, Plenum Press, N.Y., pp. 81-97, incorporated herein by reference. The second limitation, however, is not so easily overcome. The SRI method uses a combination of area, best fit ellipse, perimeter, and second moments of inertia to represent shape in order to recognize objects and determine their orientation. These object descriptors fail when objects are so close together that their images merge into a single blob.

It is an objective of the present invention to provide a robot vision system that significantly relaxes the limitations of high contrast and non-touching parts.

It is a further objective to provide a new and non-obvious system for recognizing parts presented to a robot arm.

Another objective is to provide a vision system which can be "trained" to recognize whatever part or sets of parts will be presented.

Another objective is to provide a vision system which will recognize parts without regard to orientation, or even where parts are overlapping.

Generally speaking, this system uses a new approach to part recognition where objects are characterized by their distinctive corners and edges (local features) instead of gross area characteristics.

The design is based on the following assumptions, although the system is not limited to recognizing parts that satisfy all of these assumptions:

A large majority of parts are composed of rotational and prismatic shapes only. Such parts have image silhouettes consisting of lines and ellipses (usually circles, ignoring the slight distortion due to perspective).

Nearly all parts are rigid or, at worst, are a little flexible. Wires are probably the most common exception. When present, wires are an extra complication.

Often, they are partially invisible at standard camera resolution.

Most parts have holes and almost one half have holes completely through them. The holes are usually orthogonal, so they are visible given backlighting.

Most parts have a silhouette that uniquely determines their orientation in their resting plane. Many parts have upside-down ambiguity given a silhouette only. However, part presentation is usually not completely random and not all parts are stable upside down.

The depth of parts (height above the resting surface) is dependent on the mode of manufacturing. Cast, molded, and turned parts typically have more height than sheet metal parts. Most of the parts surveyed that would likely be handled by a robot had significant depth.

Uniform reflectivity and high contrast with the background are unusual. Sheet metal parts and machined parts, probably the majority, reflect specularly. The positions of such reflections depend on the position and orientation of both the part surface and the light source.

The transport mechanism is also an important factor in determining the desired capability of the vision system. In order of occurrence, parts are transported in bins, pallets, conveyors, and miscellaneous means (e.g., by hand). Current and near term robot applications, however, involve conveyors and pallets.

The present invention utilizes a "feature-based" recognition method. This approach uses spatially interrelated boundary features such as lines, arcs, corners, and holes to visually model objects. By comparing features in the image with features in pre-taught models (prototypes), objects in the image are recognized. Since recognition is based on boundary segments and not on "boundary totals," objects may be recognized even when their boundaries appear incomplete due to low contrast or overlap.

Prior research into feature-based methods has been performed by Bob Bolles of SRI International Bolles, R., "Recognizing and Locating Partially Visible Objects: the Local-Feature-Focus Method," Technical Note 262, Artificial Intelligence Center, SRI Int., Mar. 1982; Bolles, R., "Robust Feature Matching Through Maximal Cliques," SPIE Technical Symposium on Imaging Applications for Automated Industrial Inspection and Assembly, Washington, D.C., Apr. 1979, and Walt Perkins of General Motors Research Labs, Perkins, W., "A Model-Based Vision System for Industrial Parts," IEEE Transactions on Computers, Vol. C-27, No. 2 (Feb. 1978), pp. 126-143, Perkins, W., "Simplified Model-Based Part Locator," Report GMR-3303, June 1980, G. M. Research Laboratories, Warren, Mich. They did not produce complete, practical vision systems.

In Bolles' system, the features were only corners and circular holes. In the present system, the features are lines, arcs, holes and corners. Bolles' system matched features through "maximal cliques" and this does not. Also, Bolles' system executed very slowly (10x or more). Finally, the way Bolles verifies matches is completely different (he searched the frame grab memory for image edges whereas the claimed system compares the line and arc boundary representations of the image regions with those of the prototype regions). In conclusion, there are more differences than similarities.

When the vision system of the present invention is in its normal execution mode, the operations on the image data are performed in sequence. As the camera provides sensory data on a line by line basis, connectivity analysis is performed and the scrolling display image is updated. When a region closes off (the trailing edge of the object passes under the camera), the vision system processes the region's boundary. This processing involves multiple steps, producing multiple boundary representations, the last of which is a connected sequence of lines and arcs. Finally, recognition is performed by comparing boundary features with the features of the prototype models.

More specifically, there are seven steps to the image processing:

1.   Connectivity analysis
2.   Chain encode perimeters
3.   Fit primitive edges to chains
4.   Fit lines and arcs to edges
5.   Classify line and arc features
6.   Propose prototype-image matches
7.   Verify match

An object is located and properly identified when all seven steps are successfully completed. At that time, the object's identification, position, 2-D orientation, and "goodness-of-appearance" measure are available to a robot.

The invention will be explained in full with reference to the following figures:

Figure 1 shows a robot or manipulator with which the present invention is especially useful;

Figures 2 and 3 illustrate the two potential types of vision illumination and view systems;

Figure 4 is a block diagram of the basic robot system;

Figure 5 illustrates the objects being identified and located by the present invention as they appear on a conveyor;

Figure 6 illustrates a plot of a chain encoded boundary of a region;

Figure 7 illustrates the step of fitting primitive edges to the chain encoding.

Figure 8 illustrates the step of fitting straight lines and circular arcs to the edges produced in step 3;

Figure 9 illustrates the step of verifying matches of prototypes to images.

Figure 10 is a flow chart of the run-time system;

Figure 11 is a flow chart of the step of fitting lines to the image produced;

Figure 12 is a flow chart of the step of fitting arcs to the image produced; and

Figure 13 is a flow chart of the step of classifying features on the objects to the identified;

Figure 14 is a flow chart of the steps of match proposal and verification.

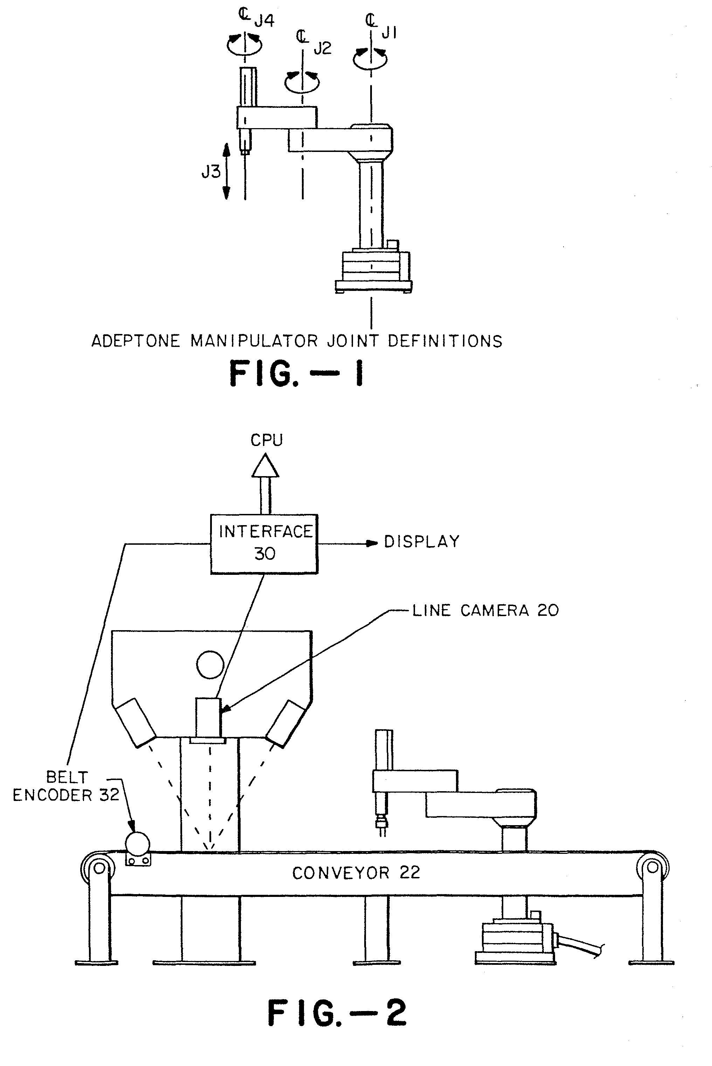

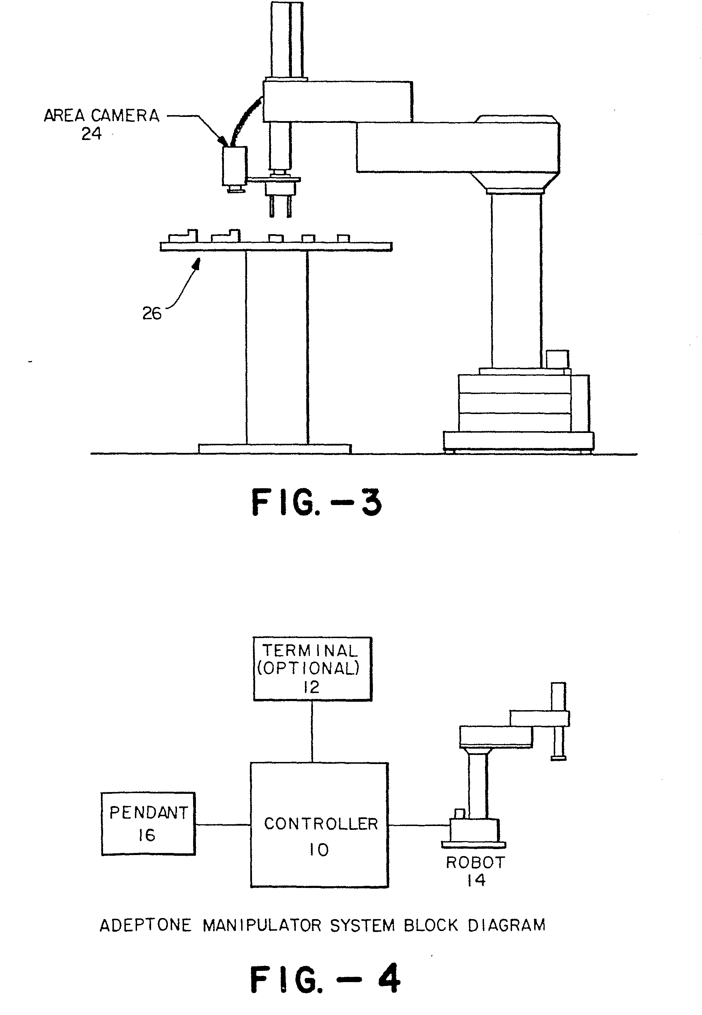

The manipulator system with which the present invention is especially useful is described in the application entitled Direct Drive Robot System, European Patent Application No.85303300.9 assigned to the assignee of this invention and incorporated herein by reference. It describes a four-axis robotic system designed primarily for production applications in light material handling, parts kitting, assembly, and packaging. The basic system consists of a controller and a robot. The robot is also called an arm or a manipulator. Figure 1 shows the controller and the robot. In addition, the basic system can be expanded by the addition of a vision system. There are two kinds of vision systems: a conveyor-based system and an area system. Figures 2 and 3 show the vision systems; they will be described in greater detail below.

The manipulator has a cast aluminum structure with electric motors to control the various joints (or axes). In some cases, an axis is referred to as a degree of freedom. The basic manipulator has four degrees of freedom, as shown in Figure 1.

Joint 1 is a rotation about the vertical column. Joint 2 is a rotation in the middle of the arm. Together, joints 1 and 2 provide for the horizontal positioning of the manipulator.

Joint 3 is a linear joint which extends and retracts vertically at the end of the arm. In typical operations, joint 3 is the axis which lifts objects and places them back down.

Joint 4 is a rotation at the hand (or end effector) mounting flange. It is the axis used to radially orient parts during an operation (such as lining up a square block to fit in a square hole).

At the end of the arm is an end effector flange which is used to mount various hands or tools onto the arm. In addition to mounting tools semi-permanently on the arm, a quick-change mechanism can be provided. With this device, the manipulator can be programmed to automatically change from one hand or tool to another by program command. This is quite useful when performing applications involving two or more operations such as drilling and countersinking.

Several characteristics of the manipulator can be controlled in addition to its position and its tool. The most commonly controlled characteristics are the manipulator speed, its path profile (for moving between positions) and the accuracy to which it reaches taught positions.

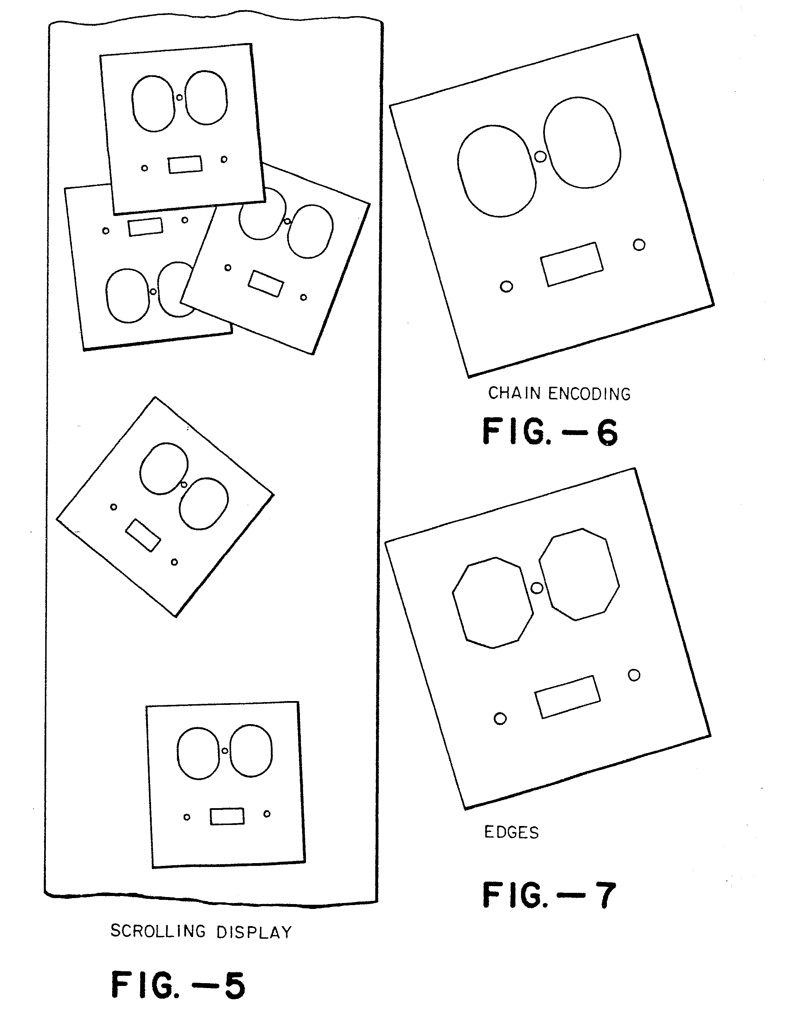

Figure 4 is a block diagram of the basic manipulator system. The controller chassis 10 houses the power supply, programming language, manipulator servo electronics and control electronics. The computer terminal 12 is used to program and control the manipulator system 14. The terminal 12 may be removed from the system after the manipulator has been programmed or if pre-written application programs are being used. The manual control pendant 16 is another means of controlling the manipulator 14. When manual (rather than computer programmed) control is desired, the manual control pendant 16 is used. Also, all application programs are designed to use the manual control pendant 16. Such pendants are well known in robot technology, and this pendant is therefore not described further. When the computer terminal 12 is removed from the system, the operator uses the manual control pendant 16 to control the manipulator. The manipulator is connected to the controller via the control cables.

The new vision system described herein uses a feature-based object recognition algorithm. It is microprocessor-based and operates quite fast, recognizing multiple objects per second. It is now integrated in Adept Technology's robots with the VAL-II robot control system described by Shimano, B., Geschke, C., Spalding, C., and Smith, P., "A Robot Programming System Incorporating Real-time and Supervisory Control: VAL-II," Robots VIII Conference Proceedings, June 1984, incorporated herein by reference.

The system processes binary images provided by a solid state camera. Although the input image is only binary, the system does edge-type processing to extract object boundary features: lines, arcs, corners and holes. The characteristics of these features and their relative spatial relationships provide an effective visual representation of the image.

The vision system compares boundary fragments (the features which are grouped in feature classes (FC)) in the image with the features of known prototypes. The prototypes are generated during a training session, during which the system is shown sample parts. When the comparison of one or more features is positive, a match is proposed that places the prototype in a particular position and orientation in the image. The prototype-to-image match is then verified by traversing the entire boundary of the prototype, looking for further evidence of its presence in the image. A threshold parameter, pre-specified by the user, determines how much of the boundary must be visible for match acceptance.

The vision system operates with either a linear array camera 20 over a conveyor belt 22 (Fig.2) or with an area array camera 24 over a pallet 26 or similar working surface (Fig. 3). The conveyor application is more complicated than the area for various reasons: the conveyor image data arrives only a line at a time at a variable rate, the image is "infinitely" long, and image coordinates along the conveyor must be kept in synchronization with the manipulator's tracking coordinates.

Since the linear array camera interface encompasses the problems of an area array interface, only the conveyor application will be discussed below.

The vision system is part of an integrated robot controller wherein various hardware and software resources are shared. The heart of the vision system is a Motorola 68000 10 MHz processor. It shares a backplane with other processors, one of which executes the VAL-II robot control system referenced above. VAL-II is the master process through which all user input and output to the vision system passes.

In addition to the processor and memory, the vision system consists of a solid state, linear array camera 20 (256x1 elements), a high resolution monochrome display, a graphics display interface board, and a camera interface board 30. The robot's conveyor tracking hardware is used to synchronize camera data acquisition with the conveyor movement. The camera is strobed whenever the conveyor moves a fixed unit of distance as indicated by the belt encoder 32, so the conveyor may move at a variable speed and even stop for an indefinite time without loss of image data or synchronization.

As the belt moves, the camera continuously sends line images to the vision processor. So, as the belt moves, the vision processor is able to form an area image of the conveyor belt. This image processing is continuous, not stopping until a "picture off" command or instruction is issued.

With the line vision system, Consight lighting, described in the above reference, is recommended. This structured lighting technique is very effective, eliminating the need for any object/background contrast. In some applications, however, conventional overhead lighting may be best.

It should be noted that the camera integration time must be controlled. For example, if the integration time is set to be 4 ms., the camera will process up to 1000/4.6 or 222 lines of image data per second. Other integration times may be selected. The shorter the time, the faster the belt may travel, but less light will be sensed by the camera.

When positioning the line camera, the camera line of sight is "exactly" perpendicular to the travel of the belt. The reason for this restraint is that prototype scaling is assumed to be constant. That is, the same object should always appear to be the same size, regardless of where in the scene it is. Consequently, the camera's direction of sight should be perpendicular to the surface upon which the objects lie. Otherwise, the objects will look bigger on the side of the surface closer to the camera than on the other side. Some scaling variance due to parallax will be impossible to avoid. In general, the further the camera is from the working surface and the shorter the objects to be recognized, the less geometric distortion will occur due to parallax.

Calibration of the system is necessary for two reasons. The vision system needs to know the ratio of pixel length to pixel width. Knowing this ratio, the vision system subsequently scales the width of pixels to make them square. This way, circles will look circular and not elliptical.

The other reason for calibrating is define the vision-to-robot relationship. The relationship is basically a transformation that will transform vision locations from image space to arm space. Image space is 2-D with pixels as the distance unit. Robot space is 3-D

0204516

with millimeters as the distance unit. The transformation usually involves translation, rotation, and scaling.

The camera is mounted over a conveyor belt, normally looking straight down at the belt. The camera interface board thresholds the image data as it arrives and presents the data to the vision processor as run-lengths (the column numbers where black-to-white or white-to-black transitions occur). The implied object boundaries are simultaneously displayed on the video monitor and the monitor image is scrolled to reflect the conveyor movement. All subsequent processing of the image data is via software.

The robot vision system recognizes and locates randomly positioned objects in the scene so that the robot may pick them up. The objects may be on a conveyor belt, pallet, or similar working surface. With vision, parts do not have to be precisely fed to the robot by a special mechanism. The resulting work cell is more flexible and more easily set up. In addition, robot vision systems may be used to visually inspect parts or to simply confirm their expected presence in the work cell.

The present system is a feature-based robot vision system, where the features are pieces of image boundaries. Specifically, the system thresholds camera images into black and white regions. Then, it characterizes the boundaries of the regions as connected sequences of straight lines and circular arcs. Lines, arcs, corners and holes are the features upon which recognition is based.

More specifically, there are seven steps to the image processing:

1. Connectivity analysis
2. Chain encode perimeters
3. Fit primitive edges to chains
4. Fit lines/arcs to edges
5. Classify line and arc features
6. Propose prototype-image matches
7. Verify match

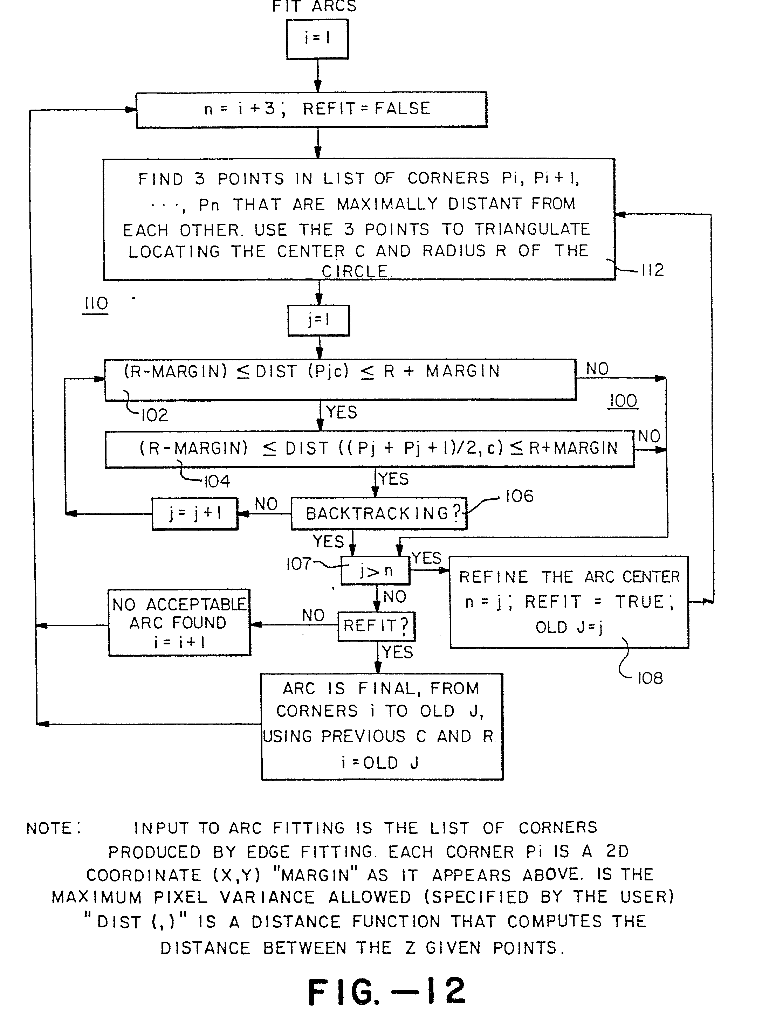

The basic flow chart of the vision recognition system appears in Fig. 10. Interrupts occur from the camera interface 30 dependent on and synchronized with the movement of the belt. Typically, if the belt is of width x, then an interrupt occurs every x/256 minute. This transfers a line of data to the processor. Following the interrupt 50, a connectivity analysis step 52 is done on the new line of data.

This analysis is essentially a blob analysis of a type done in the prior art which segments the image into black and white regions. This connectivity analysis step 54 comprises the first of the seven steps of the basic analysis process which is used to identify the objects passing by on the conveyor.

1. Connectivity Analysis (Step 54). This is the common SRI technique for separating closed regions from the background. The processing is performed in a single pass across the binary image---appropriate for "infinitely long" conveyor belt images. Input to the connectivity analysis is the output of the camera interface hardware: run-length encodings on a line-by-line basis. This compact image representation is simply a list of the column numbers where there are "color" transitions of black-to-white or white-to-black. Whereas the camera interface hardware groups contiguous horizontal pixels of the same color into run-lengths, connectivity analysis groups continuous vertical run-lengths of the same color, thereby completely segmenting the image into black and white regions. While processing the run-length encodings, the algorithm also computes the area and perimeter of each region. Finally, as regions close off, they are interrelated via parent, child, and sibling relations. A hole in a region is a child of the outer region and the outer region is a parent of the inner region. Two holes in a region are mutual siblings. A published Pascal program that does connectivity analysis based on run-length encodings is found in the following references, incorporated herein by reference. Gleason, G., and Agin, G., "A Modular Vision System for Sensor-Controlled Manipulation and Inspection," PROCEEDINGS, 9TH INTERNATIONAL SYMPOSIUM ON INDUSTRIAL ROBOTS (Mar. 1979), pp. 57-70, Cunningham, R., "Segmenting Binary Images," ROBOTICS AGE, July/Aug. 1981, pp. 4-19.

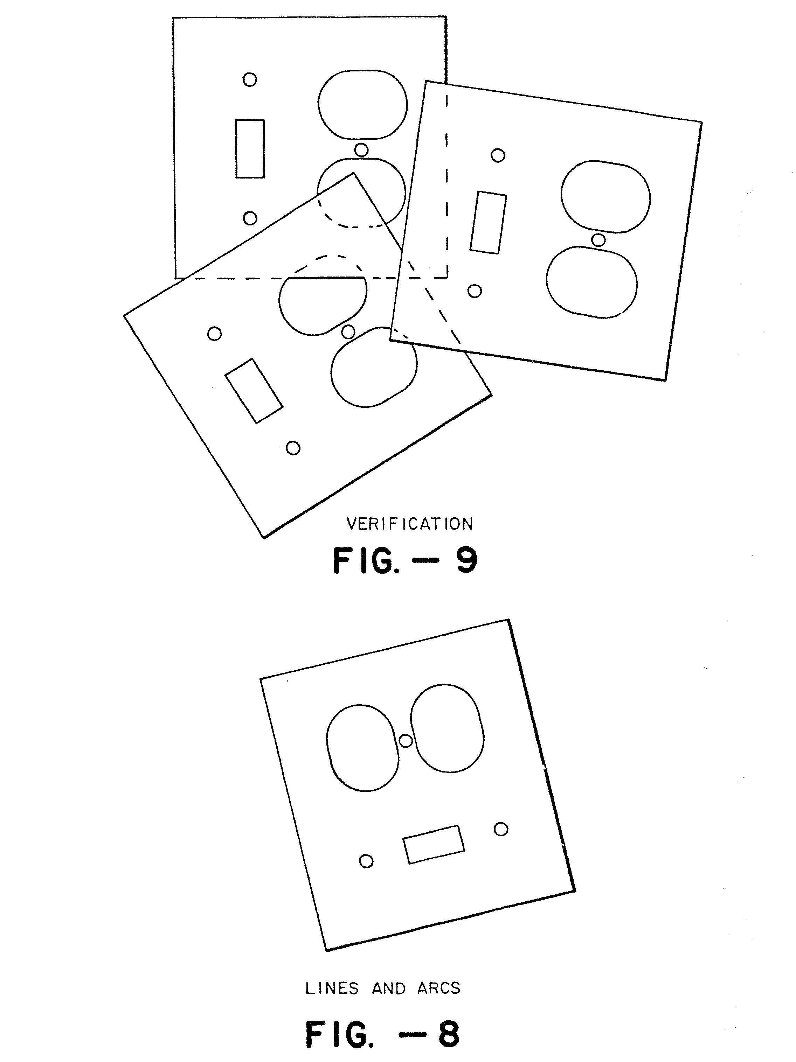

Connectivity analysis is performed in response to interrupts from the camera interface board, on a line-by-line basis. All subsequent processing, steps 2-7, is performed in the background (i.e., not interrupt driven), on a complete region basis. An illustration of the result of this step appears in Fig. 5.

2. Chain Encode Perimeters (Step 56). Processing proceeds with this step after the outermost region, the region whose parent is the background, closes off. This step produces a chain encoding representation of the region's perimeter. Using the stored run-length encodings with their region associations provided by connectivity analysis in step 1, a string of right, up, left, and down moves are produced that will traverse the region's perimeter (as illustrated in Fig. 6). The basics of chain encoding are explained by Freeman: Freeman, H., "Boundary Encoding and Processing," Picture Processing and Psychopictorics, edited by B. Lipkin and A. Rosenfeld, 1970, Academic Press, N.Y., pp. 241-266, incorporated herein by reference.

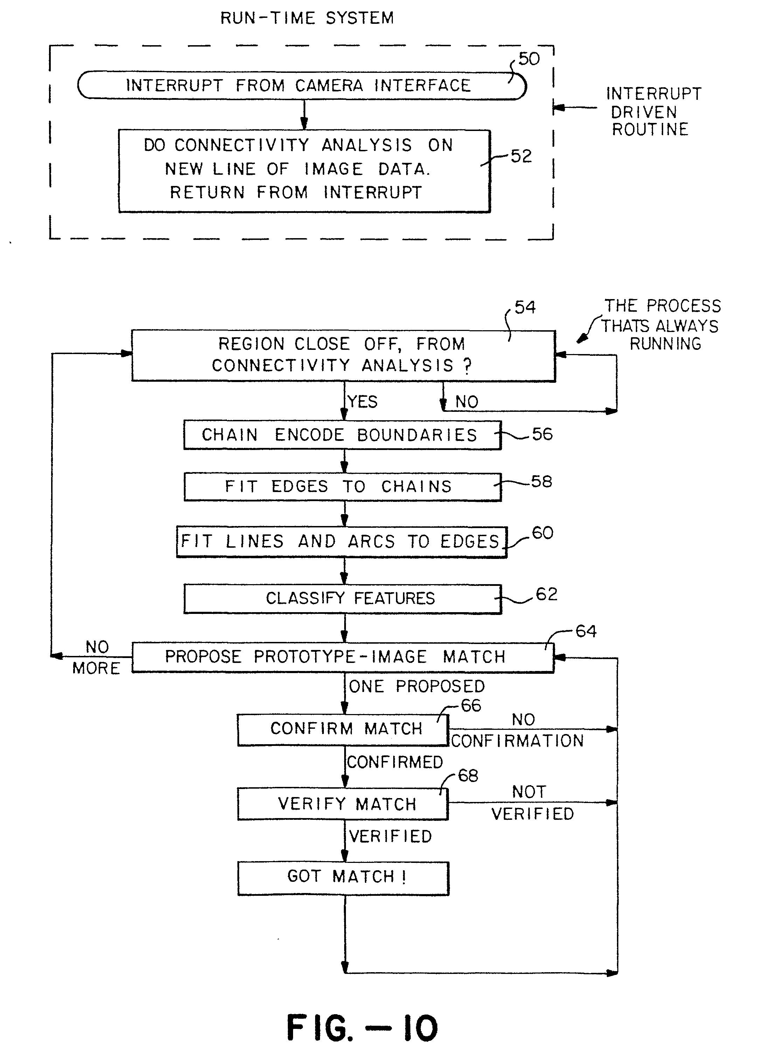

3. Fit Primitive Edges to Chains (Step 58). This step fits straight line segments to the chain encodings in order to produce a more succinct representation of the region's perimeter. The algorithm used is efficient and the edges produced are an accurate approximation to the chain encoding. A benefit of the algorithm is that the jagged (quantized) edges represented by the chain encoding are smoothed. After this step, the chain encoding data is discarded. Figure 7 illustrates the edges fit to the chain encoding in Figure 6. Corners are drawn as knots on the edges. The fundamentals of encoding are explained in Shlien, Seymore, "Segmentation of Digital Curves Using Linguistic Techniques," COMPUTER VISION, GRAPHICS, AND IMAGE PROCESSING 22, 277-286 (1983), incorporated herein by reference.

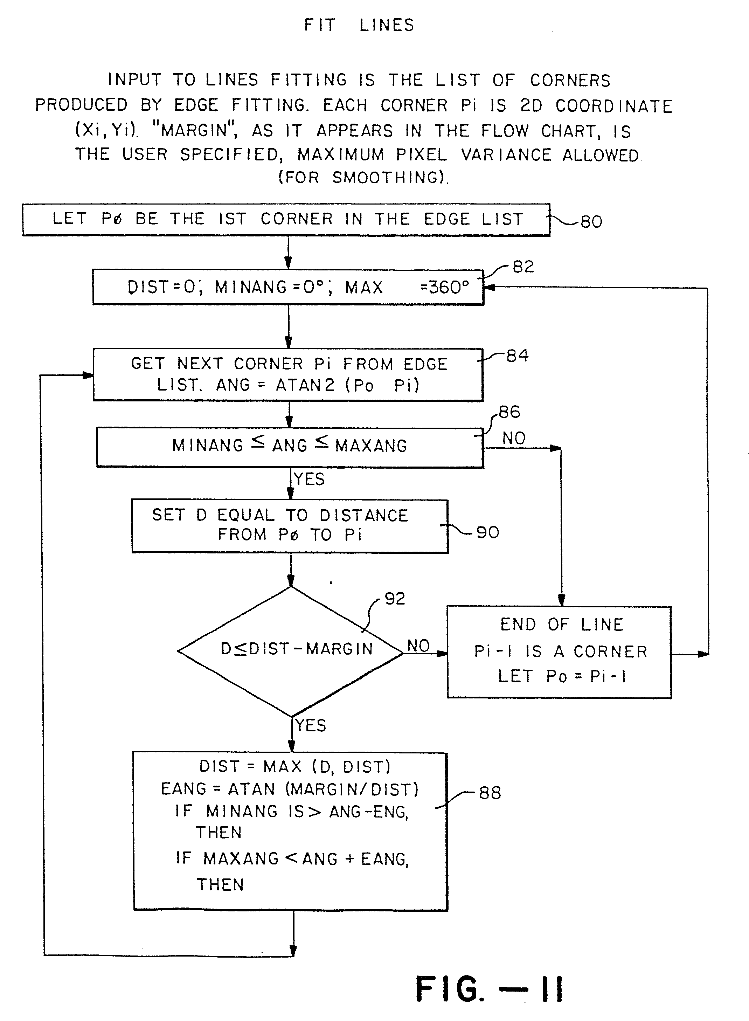

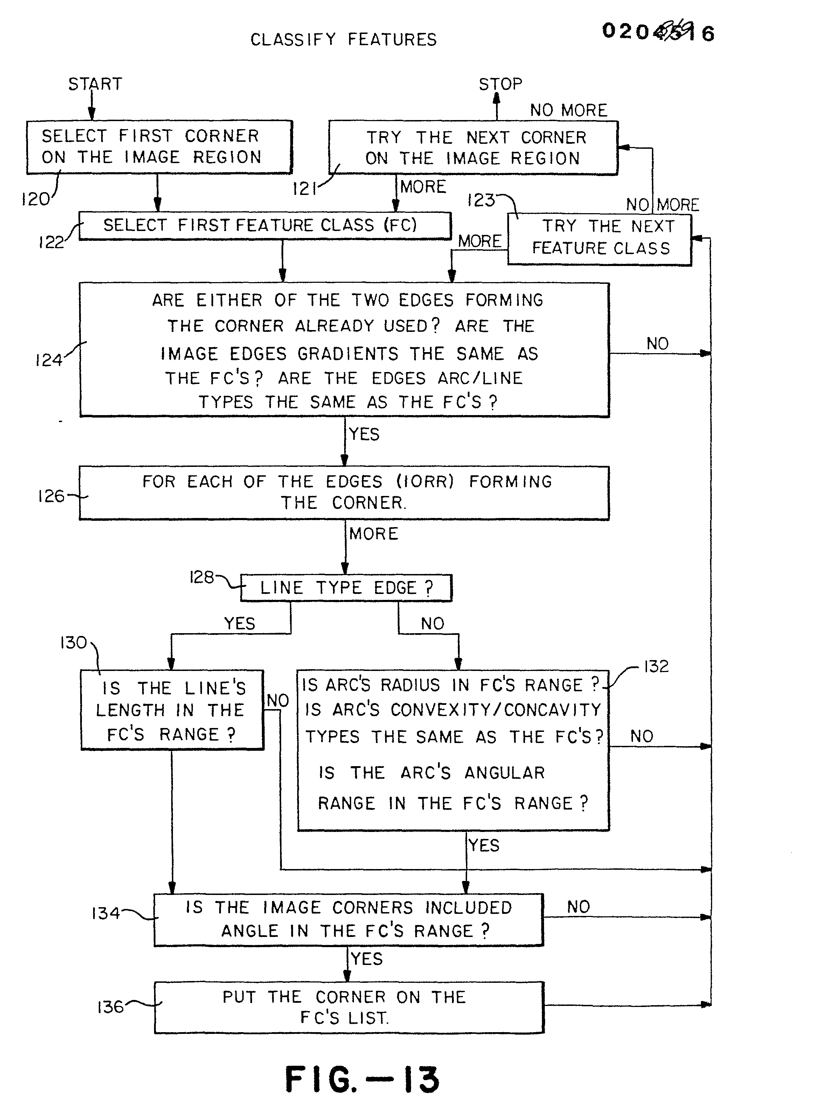

4. <u>Fit Lines and Arcs to Edges (Step 60)</u>. This processing step fits straight lines and circular arc segments to the edges produced in step 3. this step is relatively expensive in processor time, but the expense is well justified. First of all, lines and arcs are fit to within a user specified tolerance, so image smoothing is controlled. Secondly, the result is a further data reduction, especially when the parts are circular or have circular holes. Industrial parts studies have shown that the majority of parts are prismatic and rotational in shape, so their 2-D images are naturally represented by lines and arcs. The final justification for fitting lines and arcs, as opposed to fitting lines only, is that they provide a greater variety of edge and corner types, making recognition easier. Figure 8 illustrates the lines and arcs fit to the edges in Figure 7. (Note: the lines and arcs fit are not always this clean.) A more detailed flow chart of these two steps appears in Figs. 11 and 12, explained below.

5. <u>Classify Features (Step 62)</u>. This step classifies all connected edges and corners, where the edges are the lines and arcs from step 4, and associates them with the feature classes of the known prototypes. The feature classes are chosen during training, based on the objects the user wants the vision system to recognize. Generically, there are only a few types of corner classes: line-line, line-arc, arc-line, arc-arc, and circle. In addition, there are the wild card variations (or edge classes): line-any, any-line, arc-any, and any-arc. The "any" refers to an edge that may belong to a different object because two parts touch or overlap.

Although there are only a few generic types of features, each of the prototype's feature classes have specific parameterized definitions. Associated with each corner class is an acceptable minimum and maximum included angle (angle formed by the two edges). For an edge class, the angle is $0°-360°$. Also, associated with each line edge of a feature class are acceptable minimum/maximum lengths. For arcs there are acceptable minimum/maximum angular ranges, minimum/maximum radii, and a convex/concave indication.

Each edge in the image is compared with all feature classes. When the types correspond and the measures of the edge fall within the acceptable ranges of the class, the edge is placed on the feature class' association list. Some edges in the image may not be associated with any classes whereas others may be associated with multiple ones.

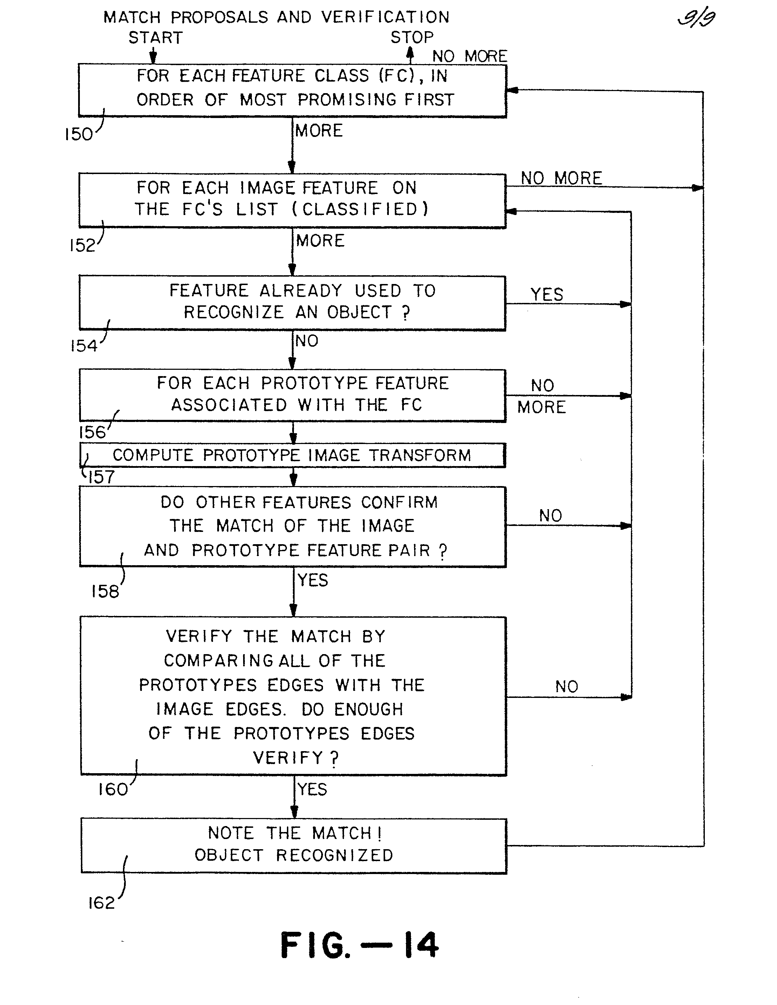

A more detailed flow chart of this step appears in Fig. 13.

6. Propose Prototype-Image Matches (Step 64). This step proposes that prototypes are present in the image at specific positions and orientations. These prototype-to-image match proposals are based on the feature classifications made in the previous step. During training, the feature classes are ordered according to uniqueness and "clarity." At run-time, in this order, each class is considered until all image edges have been accounted for or until all possible matches have been proposed. Each image edge and prototype edge associated with a class are a possible match. However, such matches must be confirmed before an official proposal can be made and step 7 begins.

Confirmation (Step 66) is a partial verification (see step 7 below) that is required when more than one prototype corner is associated with a feature class. Even if there is only one corner associated with a class, confirmation will be used if the prototype is complex, having many edges, so that mismatches will be detected before the expensive verification step. The need for confirmation is determined during training when feature classes are chosen. Associated with each prototype corner is a list of the confirming corners which, if present in the image at the same relative position, would distinguish it from others. Nearby corners are chosen as confirming corners when appropriate because they are more likely to be visible (not occluded) along with the corner to be confirmed.

7. Verify Match (Step 68). Given a single prototype-to-image match proposal, this step verifies the prototype's presence in the image. The prototype's boundary representation is transformed to the image via the 2-D translation and rotation proposed in step 6, and a search is made for image edges that align with the prototype edges. The close-enough test is to within a user specified tolerance. Although the signs of the edges (black-to-white versus white-to-black) must correspond, the edge types do not. So lines verify arcs and vice versa. If enough of the prototype's boundary is present in the image, the match is accepted. "Enough" is a weighted threshold, specified by the user during training.

Figure 9 shows the result of three match verifications. For each proposed match, the prototype was drawn overlaying the image. Edges that were verified are shown with solid lines. Edges not verified are shown with dotted lines. This figure, as well as Figures 5 through 8, are display options in the vision system.

A flow chart of this step appears in Fig. 14, explained below.

The operator teaches the vision system to recognize objects by showing the system examples of them. This process is called recognition training and the objects taught are called prototypes. The prototype models are stored in computer memory for use during the recognition process. However, the prototypes may be stored on disk for retrieval at another time.

Training the vision system to recognize specific parts is necessary because the system is based on breaking down the edges (external and internal) into lines and arcs. However, there are some important training guidelines and recognition parameters that may be critical for some applications.

Via training, the system collects mean and standard deviation statistics on the dimensions of the parts. The more examples of the part given, the better. As a general rule, the operator should train the system on a dozen examples. With a little experience, training the system on a dozen examples is easy.

The system may be trained to recognize multiple objects at a time. There is no fixed maximum number of prototypes, but memory is limited and the more prototypes the system knows about, the more time it takes to distinguish between them. So there is a practical limit. As a guideline, the system may be taught ten very simple objects or one very complicated object. An unlimited number of prototypes may be stored on disk, however.

The system processes the image of the prototype through boundary analysis described previously. The result of the line and arc fitting is displayed on the vision monitor so that the operator can edit it. From this point on, all training is performed using the robot manual control pendant.

The boundary representation of the prototype must be edited to clean up the system model of the part's "topology." Here, topology refers to the individual edge types, either lines or arcs, and the number of corners. Each trained instance of the part must have the same topology.

The operator edits the model by moving a cursor around the screen and pushing edit keys on the manual control pendant. The effect of an edit command is instantly displayed. There are five edit functions, controlled by the five "soft keys" at the top of the manual control pendant. A two-line display on the pendant labels the keys as follows:

| Delete | Restore | Arc/ | Delete | Show |
|--------|---------|------|--------|------|
| corner | corner  | line | hole   | features |

Briefly, the keys have the following effects. The "Delete corner" key deletes the corner that is nearest the cursor position. Conversely, the "Restore corner" key creates a new corner. The "Arc/ line" key toggles the type of the edge nearest the cursor. A line becomes an arc or vice versa. The "Delete hole" key deletes the region containing the cursor. This key is for deleting undesirable holes in the image. Since the effect of this key cannot be undone, the manual control pendant prompts for confirmation. In response, the YES or NO key must be pushed. Finally, the "Show features" key makes the system blink the corners and separately show the lines and arcs in the boundary model. To terminate this special display mode and resume editing, the "Show features" or REC/DONE key must be pressed.

The cursor is moved about the screen via the keys and the number key pad. The speed slide on the manual control pendant may be used to control the speed of cursor movement.

The REC/DONE key terminates editing. When pushed, the operator is presented with the following choices on the pendant two-line display:

Resume          Discard          Pick ref.
editing         example          edge

The "Resume editing" soft key will return the user to the editing mode described above. The "Discard example" key will abort the edit of the prototype instance. The "Pick ref. edge" key is the normal exit key. Before pushing this last key, the operator must position the cursor on an edge of the prototype. The edge chosen will be the reference edge for future examples of the part. The same reference edge must be chosen with each new instance of the part so that the system knows how to correlate the example with the old.

When the operator is finished editing an example and the example is not the first instance of the prototype, the system compares the topology of the example with that previously taught to ensure one-to-one correspondence. If a difference is present, the system displays the previously taught prototype next to its new instance while blinking the edges that differ. The operator may then re-edit the new instance.

Each prototype has an "effort level" associated with it. One of four levels may be chosen: 1, 2, 3 or 4. An effort level must be assigned when the prototype is first defined, but it may be changed at any later time. This determines how much recognition effort should be used with the prototype. As the effort level increases, recognition speed decreases and more memory is needed, but the recognition success rate increases. The effort level should be chosen as a function of the object complexity (and uniformity) and whether or not the objects will be separate, touching, or overlapping. Effort level is inversely proportional to object complexity. The simpler the part, the more effort needed. Assuming parts touch but do not overlap, the following effort levels should be used:

| LEVEL | TYPES OF PARTS |
|-------|----------------|
| 1 | Complicated parts, with more than 30 edges |
| 2 | Parts with 20-30 edges |
| 3 | Simple parts, with fewer than 20 edges |
| 4 | Very simple parts with a few vague features |

In general, a higher effort level must be used when there are fewer features for the vision system to "key on." A feature is a corner or a hole. The vision system recognizes objects by looking for pairs of nearby features that unambiguously indicate the presence of the object in the image. An effort level higher than that specified above will be needed when there are few unique, distinct feature pairs. Example situations are:

° Heavily overlapping objects (occluding features)
° Mostly ambiguous features (local/global symmetries)
° Low contrast (high feature variation between images)

The edges of a prototype are assigned weights and the prototype is assigned a verify percent. The operator provides the values when the prototype is first defined and may change them at any later time. The edge weights and verify percent are primarily used during verification, the final step in the recognition process.

The verification step verifies a match proposal. Given a single prototype-to-image match proposal, this step verifies the presence of the prototype in the image. The prototype boundary representation is transformed to the image and a search is made for image edges that align with the prototype edges. If enough of the prototype boundary is present in the image, the match is accepted. The measure of "enough" is a weighted threshold, based on the edge weights and the verify percent.

If all edges are assigned the same weight, then the verify percent is simply the percentage of the prototype boundary which must align with edges in the image in order for the match to be accepted. for instance, if the prototype verify percent is 70, then 70% of the prototype boundary must be verified by image edges.

If some edges are assigned different weights than others, they contribute different amounts per unit length. For instance, consider a prototype whose outer boundary has a length of Lo and an assigned weight of 50. Assume it has one hole with a length of Lh and an assigned weight of 100. The total weighted boundary of the prototype is (50*Lo + 100*Lh). If the verify percentage is 90%, the total weighted length of the boundary which must verify for acceptance is 0.9* (50*Lo + 100*Lh). Note that during the verification process, the parts of the outer boundary that verify are measured in length and multiplied by 50 before being accumulated in the verify total. And, the parts of the inner hole boundary that verify are counted with twice the weight.

The operator must be familiar with verify percent, but edge weights are only important for special recognition tasks. Example uses of selective edge weights and verify percents are:

&#8728; If objects are unlikely to touch or overlap, all edges should have the same weight and the verify percent should be high.

&#8728; If objects are likely to touch but not overlap, then outer edges should have less weight than the interior edges (for example, 1:2 ration). If overlap is likely, then the difference should be reduced (for example, 3:4 ratio).

&#8728; If two different prototypes are similar except for one hole, then the hole should be given very high weight with respect to the rest of the boundary.

&#8728; If an object has a hole that is unimportant and not always present, then the boundary of the hole should have a weight of zero. (Actually, the hole should have been deleted from the prototype model at the start.)

° If the application is inspection and only a part of the boundary is being inspected, then that part should be given a high weight.

After the user has trained the vision system (by showing it examples of the objects it is supposed to recognize), the system automatically performs "recognition planning." When the system plans, it analyzes the prototypes and fills in recognition strategy tables. To automatically determine the recognition strategy, part symmetry and ambiguous similarities between parts are detected, feature classes are chosen, confirming features are picked that will disambiguate matches, and all lists (e.g., of all feature classes) are ordered to optimize processing speed.

Recognition planning consists of the following processing steps, executed in order:

1.  Construct primary feature classes
2.  Merge similar primary feature classes
3.  Construct subclasses
4.  Merge similar feature classes
5.  Construct simulated images of the prototypes
6.  Classify the boundary features of the simulated prototypes
7.  For each feature, find nearby features for confirmation
8.  Order all lists to optimize processing speed

1.  A feature class is constructed for each corner and hole of each prototype. Each feature class specifies a pair of edge types: line-line, line-arc, arc-line, arc-arc, or circle. The feature classes also specify an acceptable minimum and maximum included angle. Further, associated with each line edge are acceptable minimum/maximum lengths. Associated with each arc edge are acceptable minimum/maximum angular ranges minimum/maximum radii, and a convexconcave indication. Minimum/maximum values are minus/plus two standard deviations from the mean.

2.  Similar feature classes are merged. So, for example, if a prototype has been modeled as a square object, its 4 feature classes would be merged into 1 feature class. Specifically, the merge criteria for merging feature classes FCa and FCb are as follows:

° FCa and FCb are "equal" (their types are the same and their mean values fall within the other's range of acceptable values) and

° every FC that FCb is "equal" to is also "equal" to FCa.

The second condition prevents the epsilon neighborhoods (standard deviation ranges about mean values) from sliding. Otherwise, if A "equals" B, and B "equals" C, but A not "equals" C, then A would be in the same group as C.

3. Subclasses of the primary feature classes are constructed next. In a way, the subclasses should be called super-classes because they often encompass their associated primary feature classes. Subclasses are based on templates permanently programmed into the system. Each of the primary corner types line-line, line-arc, arc-line, arc-arc and circle has about a dozen subclass templates. Based on the templates, up to about a dozen subclasses are constructed for each primary class. The actual number constructed depends on the effort level associated with the prototype. (There are 4 effort levels. At effort level 1, no subclasses are used. At level 2, some. are used, and at level 3, more are used. At level 4, all subclasses are used.)

The subclass templates are ordered so that at higher levels, the feature class encompasses a broader range of features. For instance, a circle feature has subclasses consisting of arc-arc, arc-line, and line-arc pairs at effort level 2. At effort level 4, there are line-line, line-any, and arc-any type subclasses with wide acceptable ranges of lengths, radii, etc.

4. Similar feature classes are merged, exactly as in Step 2.

5.    In preparation for steps 6 and 7, images of the prototypes are simulated.  An image boundary representation consisting of arcs and lines is constructed.

6.    Next, the features of the simulated prototype images constructed in the previous step are classified with respect to the feature classes constructed in steps 1-4.  The software that is executed is the same as that which is executed during normal run-time.  This is the "classify features" step of image processing.

7.    In this step, confirmation features are chosen for each prototype corner.  Up to 4 corners are chosen for confirmation.  Confirming corners are picked if the prototype is complex (for efficiency, because match verification is expensive), if the prototype corner is ambiguous (indicated by the association of any other corners with the prototype corner's feature classes), or if the prototype corner is a circle and the prototype is not circularly symmetric (circle features provide translation, but not the rotation part of a transformation when a match proposal is made).

If confirmation is needed, nearby corners are chosen and tested for ambiguity.  To determine if a nearby corner is unambiguous as a confirming corner, match proposals are proposed between the prototype corner being confirmed and all simulated image corners that have been associated (classified) with the prototype corner's feature classes.  If the prospective confirmation corner is successfully used to confirm any proposed match except for the correct one, then the prospective confirmation corner is discarded for reasons of ambiguity.  Note that this simulation of proposing and confirming matches is performed by executing the same software that is executed during normal run-time.

8.    Finally, all lists are ordered to optimize processing speed.  By the time this step has been reached, all feature classes have been chosen, all confirming corners have been picked, and the simulated images of the prototypes are no longer needed.  The lists ordered are the lists of all feature classes, the lists of feature classes associated with each prototype feature, and the lists of prototype features associated with each feature class. The list of all feature classes is ordered according to recognition cost, least first.

Once planning has been completed, then part recognition can begin following the flow chart of Figure 10.

In order to recognize an object, a match must be proposed, confirmed and verified. Some proposed matches require no confirmation, however. Verification per object costs the same, regardless of the feature class that provided the seed or that provided confirmation. However, if the match is bad or the resulting transformation is inaccurate, an extra verification may be needed. Extra verifications are counted in the cost estimates. Extra verifications are needed because of inaccuracy and result in refinement of the transformation.

The goal is to order the feature classes so that those near the top of the list are the most promising candidates for the match proposer: only 1 or very few prototype features are associated with the class, no (or little) confirmation is needed, the associated features are high in user-assigned verification weight, image- prototype feature matches from this class provide a relatively accurate proto-to-image transformation, and few "bogus image features" become associated with the class. This last item, number of bogus image features, is the most difficult to directly predict. These are image features that satisfy the feature class' membership requirements but do not correspond to any real feature in the prototype. Quantities of bogus features should only be found on feature classes with very loose membership requirements, and such classes will usually have many prototype features in association and provide relatively inaccurate transformations, so bogus features are handled indirectly.

The basic unit of cost is CNF. Cost in terms of CNF are as follows:

    1 match proposal = 1 CNF

1 confirmation = 1 CNF

1 verification = VC * #_corners_in_object * CNF VC is a constant multiplier (currently 3), chosen empirically by comparing some old timings of CPU time spent proposing and confirming matches versus verifying matches. In the following discussion, the word "corners" is used to mean both corners and edges (i.e., features).

The cost per feature class (FC) is:

$$COST(FC) = (F(FC) + A(FC))*I(FC) + D(FC) + W(FC)$$

where:

$F(CC)$ is the cost of proposing matches and confirming them

$A(CC)$ is amount of ambiguity times cost of verification

$D(CC)$ is the position deviation times cost of verification

$W(CC)$ is the user-assigned weight times cost of verification

$I(CC)$ increases $F()$ & $A()$ because of effort level imbalance

More specifically

$$F(CC) = (SUM[Ccost(c)+CNFcost(Ccnf)] * (1+1/\#\_c\_in\_CC))/2$$
$$c\ in\ FC$$

where

$$CNFcost(Ccnf)= \quad SUM[Ccost(p)*SUM[q\ in\ FC]/ \#\_CC\_in\_p]$$
$$p\ in\ Ccnf \qquad FC\ of\ p$$

"SUM ["represents the summation symbol (capital epsilon). The "c in FC" under the first SUM means for each prototype corner in the feature class. The "p in Ccnf" means for each prototype corner in C's confirmation list and "CC of p" means for each feature class of corner p. In summary, $F(CC)$ is the cost of proposing matches and successfully confirming one of them, given a single image corner. It is assumed that matches will be proposed with $\frac{1}{2}$ the prototype corners before a successful match is made and that all confirmations up to that point fail. CNFcost is the cost of testing all the confirming corners on the confirmation list multiplied by the expected number of image corners on the confirming corners' feature classes (assumed to be the same as the number of prototype corners).

Ccost (c) is    (1 CNF for L-L, L-other, and circle corner types) or (2 CNF for L-A and A-other types)

or (4 CNF for A-A types)
   * EFFORT_LEVEL(cc)

The additional cost of matching or confirming corners involving an arc covers the additional cost of recentering the arc. So, for a match of a line-other pair with a confirming corner that is a line-line, the proposal and confirmation cost is 1+1=2 CNFs. A match of a circle with a confirming corner that is an arc-arc will cost 1+4=5 CNFs. (Circles are not recentered). The cost of verification is independent of line/arc type.

W(CC)=(SUM[1/max(.0001,WT(c))* VC*#_c_in_object*CNF]/#_c_in_CC
         c in FC

W(CC) takes into account any unequal weight between prototype edges. The range of values of WT(c) is 0 to 1. The "max(.0001,x)" prevents a zero divide. "#_c_in_object" is the number of corners in the object. This times VC*CNF is the cost of verification. The idea here is that if an edge or corner is critical, then it must disambiguate between parts in some important way. Given that the user does not assign special weights to edges, then W(CC) will simply be the cost of one verification.

A(CC)=SUM[AMBIGUOUS(c) * VC*_c_in_object*CNF * (#_c_in_CC-1)/2
         c in FC

A(CC) accounts for extra verifications due to ambiguity (possibly symmetry). If the corner c has no unique confirming corners, then AMBIGUOUS(c) is 1. Otherwise, AMBIGUOUS(c) is 0. A(CC) will usually be 0. As an example where it is not, however, consider a simple object--a circular object. If another prototype to be recognized has circular holes similar to the circular object to be recognized, then there will be ambiguity. The circular object has no confirming corners, yet will be confused (verifications attempted) with the circular holes of the other object. Note that in this case, the color of the circular object must be the same as the color of the holes of the other object. There are other cases, however, of symmetry or ambiguity, where additional cost must be modeled.

I(CC) is a factor that increase F() and A() because of effort level imbalance between prototypes. If all prototypes have the same effort level, then I(CC) will be 1.0 for all CC's. Otherwise, I(CC) is greater than 1.0 for CC's whose effort level is greater than the [maximum] effort level of other prototypes. This compensates for the situations in which, for example, a complicated part with 70 corners at level 1 is present with a simple part with 5 corners at level 4. The 4th level CC's of the simple part would otherwise have a lower cost than the level 1 CC's of the complicated part and possibly dominate recognition attention. The complicated part will usually have numerous extra corners forming numerous extra little edges that will be on the simple part's level 4 CC's. The presence of the edges is not compensated for anywhere else in the CCORDER computations. Specifically, the computation is as follows:

$$I(CC) = (\#\_c\_in\_CC + SUM(\#\_c\_in\_P * ifact(P))) / \#\_c\_in\_cc$$
$$proto\ P$$

where d =      EFFORT_LEVEL(CC) - EFFORT_LEVEL(P)
and ifact(P) = 0                    if d == 0
             = 2**d / 32            otherwise

Finally, D(CC), the most complicated factor, is defined as follows: It is the expected cost of an extra verification due to inaccuracy of the proto-to-image transformation.

$$D(CC) = (SUM[MAX(6,DEV(c)/MAXDIST * VC*\#\_c\_in\_object*CNF] /$$
$$\#\_c\_in\_CC$$
$$c\ in\ FC$$

MAXDIST is the acceptable distance error margin used by VERIFY, DEV(c) is the "expected" deviation in the transformation that a match of the corner "c" in the specific feature class "CC" will provide. Again, "VC*#_c_in_object*CNF" is the cost of one verification. The rest of this discussion deals with DEV().

DEV(c) looks at the corner c, the range of image corners that will belong to c's feature class FC, and estimates how good of a transformation will be provided. There are obvious distinctions that can be made. For instance, a corner made up of two long lines meeting at 90° will provide a more accurate transformation than a pair of short lines with an included angle of 135°. However, the computational model of DEV tries to make even subtle distinctions.

To estimate DEV(c), the translational and rotational components of the proto-to-image transformation are computed separately. First, the expected uncertainty in translation (usually the corner coordinates) is estimated. Then, the uncertainty in rotation angle is estimated. A rotation of the entire prototype by this angle of uncertainty is then hypothesized and the resulting average displacement is estimated and added to the expected uncertainty in translation previously computed. The computations of DEV(c) uses the PCORN's COORD_SD (standard deviation in coordinate position), PLINE's DIR_SD (standard deviation in direction vector angle), and PARC's CENT_SD (standard deviation in center position).

Each feature·class specifies an acceptable range of values such as min and max line lengths and radii. Depending on the particular deviation calculation, a specific value is chosen that is midway between the prototype corner's mean value and the feature class' "worst" value. For line lengths, the worst value is the shortest acceptable length. For the angular ranges of corners, it is the acceptable angle closest to 180°. The computation of DEV(c) is performed by case according to the prototype's edge pair types. DEVt(c) is the deviation due to translation and DEVr(c) is the deviation due to rotation.

LINE-LINE. In this case, translation is a function of the corner alone and orientation is a function of the 2 lines' direction vectors, weighted by their lengths. Definitions and the calculation of DEV(c) are:

AP = Proto corner's included angle in the range 0-180°
AC = FC expanded  included angle in the range 0-180°
COORD_SD = One standard deviation in the proto corner's position
DEV_SD = One standard deviation in proto's lines' directions (angle)
Lp = Length of the prototype lines (i.e., sqrt(l0**2+l1**2))
Lc = FC reduced length of the lines
D = average distance from corner to other points in object

DEVt(c) = COORD_SD * cos(max(0,Ap-90))/cos(max(0,Ac-90))
DEVr(c) = sin(DIR_SD) *Lp * D / Lc

DEV(c) = DEVt(c) + DEVr(c)

LINE-other.  This case is similar to the LINE-LINE case except only one line is used.  The corner location is particularly suspect.

Lp = prototype's line length
Lc = FC expanded line length
COORD_SD = One standard deviation in the proto corner's position
DEV_SD = One standard deviation in proto's lines' directions (angle)
D = average distance from corner to other points in object.

DEVt(c) = COORD_SD + MAX(0, Lp - Lc)
DEVr(c) = sin(DIR_SD) * Lp * D / Lc

DEV(c) = DEVt(c) + DEVr(c)

The remaining cases involve arcs.  All arcs used in the proposal of a match are re-centered.  Arcs are re-centered to reduce the uncertainty in perceived position of the arc's center, knowing the arc's radius (same as the prototype arc's radius).  The pessimistic positional error of the recentering algorithm is:

RECerr(a) = sqrt(M*M+(M/2*tan(a/2)))**2)

Where a is the FC reduced angular range of the arc and M is the standard deviation in the arc's center position.  If the angular range is greater than or equal to 180°, M/tan(a/2) is 0, so the error is simply M.

CIRCLE.  For circles, translation depends on the center of the circle and rotation depends on the relative direction of confirming corners (unless the object is circularly symmetric).  Note:  subclasses of circles (e.g., line-any) are also treated as follows, even though they are on a non-circle class.

Ac = FC reduced angular range of the circle edges
D = average distance from center to other points in object
L(cf) = distance between circle center and confirming corner cf

DEVt(c) = RECerr(Ac)
DEVr(c) = (SUM[DEVt(cf)/L(cf)] / #_cf_in_confirms) * D
cf in confirms

DEV(c) = DEVt(c) + DEVr(c)

ARC-other.  The arc is re-centered, but half the translation information is in the corner position.  As with LINE-OTHER, the corner position is suspect.  However, in this case, the orientation of the corner depends on the arc center and corner position . . . a flaky feature at best.

Ap = angular range of the prototype arc
Ac = FC reduced angular range of the circle edges
R = radius of the arc's circle
D = average distance from center to other points in object
COORD_SD = One standard deviation in the proto corner's
position

DEVt(c) = (RECerr(Ac) + (Ap - Ac)*R + COORD_SD) / 2
DEVr(c).= DEVt(c) * D / (R/2)

DEV(c) = DEVt(c) + DEVr(c)

ARC-ARC.  Both arcs are recentered and the new centers are used to determine the translation (using the mid-point of the two centers) and rotation (using the line connecting the two centers as a direc-tion vector).

Ac1, Ac2 = FC reduced angular range of arcs 1 and 2
L = distance between arc centers
D = average distance from center to other points in object

DEVt(c) = (RECerr(Ac1) + RECerr(Ac2)) / 2
DEVr(c) = DEVt(c) * D / L

DEV(c) = DEVt(c) + DEVr(c)

LINE-ARC. The line's direction determines the orientation, the arc is recentered, then the new center of the arc is moved toward or away from the corner so that their separation is exactly one radius.

Aip = Proto corner's included angle
Aic = FC extended included angle in the range 0-180°
Ac = FC reduced angular range of the arc
Lp = Length of proto line
Lc = FC reduced length of the line
DEV_SD = one standard deviation in proto's line's directions
(angle)
COORD_SD = one standard deviation in the proto corner's
position
D = average distance from center to other points in object
DEVt(c) = (RECerr(Ac)
    + COORD_SD*cos(max(0,Aip-90))/cos(max(0,Aic-90)))/2
DEVr(c) = sin(DIR_SD) * Lp * D / Lc

DEV(c) = DEVt(c) + DEVr(c)

Once planning has been completed, then part recognition can begin following the flow chart of Figure 10.

WHAT IS CLAIMED:

1.   A method for identifying parts comprising

a)   developing sensory data for an object on a line by line basis;

b)   separating closed regions from background by a connectivity analysis of the data;

c)   developing a chain encoded representation of the region's perimeter;

d)   fitting edge segments to the chain encoded data;

e)   fitting line and arc segments to the edge segments;

f)   classifying all segments by feature class;

g)   proposing a match of image of features present in an object; and

h)   verifying the presence of features in the object image to positively identify the object.

ADEPTONE MANIPULATOR JOINT DEFINITIONS

# FIG. — 1

# FIG. — 2

AREA CAMERA
24

26

# FIG. -3

TERMINAL
(OPTIONAL)
12

PENDANT
16

CONTROLLER
10

ROBOT
14

ADEPTONE MANIPULATOR SYSTEM BLOCK DIAGRAM

# FIG. - 4

0204516

3/9

SCROLLING DISPLAY

FIG. —5

CHAIN ENCODING

FIG. —6

EDGES

FIG. —7

41/9

0204516

VERIFICATION

# FIG. — 9

LINES AND ARCS

# FIG. — 8

RUN-TIME SYSTEM

```
┌──────────────────────────────────────────────┐
│   ╭────────────────────────────────────────╮  50
│   │    INTERRUPT  FROM  CAMERA  INTERFACE   │        ◄─── INTERRUPT
│   ╰────────────────────────────────────────╯            DRIVEN
│                      │                        │          ROUTINE
│        ┌─────────────▼──────────────┐  52
│        │  DO CONNECTIVITY ANALYSIS  ON│
│        │   NEW LINE  OF  IMAGE  DATA.│
│        │   RETURN  FROM  INTERRUPT    │
│        └──────────────────────────────┘
└──────────────────────────────────────────────┘
```

```
                                            54          THE PROCESS
        ┌────────────────────────────────────┐         THATS ALWAYS
        │    REGION  CLOSE  OFF,  FROM       │◄───────   RUNNING
   ┌───►│    CONNECTIVITY  ANALYSIS ?        │◄──┐
   │    └────────────────────────────────────┘   │
   │         │YES              │NO               │
   │    ┌────▼──────────────────────┐  56        │
   │    │  CHAIN  ENCODE  BOUNDARIES │            │
   │    └────────────────────────────┘           │
   │    ┌────▼──────────────────────┐  58        │
   │    │    FIT  EDGES  TO  CHAINS  │            │
   │    └────────────────────────────┘           │
   │    ┌────▼──────────────────────┐  60        │
   │    │ FIT LINES  AND  ARCS  TO  EDGES│       │
   │    └────────────────────────────┘           │
   │    ┌────▼──────────────────────┐  62        │
   │    │    CLASSIFY  FEATURES      │            │
   │    └────────────────────────────┘           │
   │  NO      │                          64      │
   └──┤  ┌────▼──────────────────────────┐       │
 MORE    │  PROPOSE PROTOTYPE-IMAGE  MATCH│◄──────┤
         └────────────────────────────────┘       │
              │ONE PROPOSED                        │
         ┌────▼──────────────┐ 66    NO           │
         │   CONFIRM  MATCH   │──────────────────►│
         └────────────────────┘  CONFIRMATION     │
              │CONFIRMED                           │
         ┌────▼──────────────┐ 68    NOT          │
         │   VERIFY  MATCH    │──────────────────►│
         └────────────────────┘  VERIFIED         │
              │VERIFIED                            │
         ┌────▼──────────────┐                    │
         │   GOT  MATCH !     │                    │
         └────────────────────┘                    │
              │                                     │
              └─────────────────────────────────────┘
```

FIG. – 10

0204516

## FIT LINES

INPUT TO LINES FITTING IS THE LIST OF CORNERS
PRODUCED BY EDGE FITTING. EACH CORNER Pi IS 2D COORDINATE
(Xi, Yi). "MARGIN", AS IT APPEARS IN THE FLOW CHART, IS
THE USER SPECIFIED, MAXIMUM PIXEL VARIANCE ALLOWED.
(FOR SMOOTHING).

LET P∅ BE THE IST CORNER IN THE EDGE LIST — 80

DIST = O; MINANG = O°; MAX = 360° — 82

GET NEXT CORNER Pi FROM EDGE
LIST. ANG = ATAN2 (Po  Pi) — 84

MINANG ≤ ANG ≤ MAXANG — 86   NO

YES

SET D EQUAL TO DISTANCE
FROM P∅ TO Pi — 90

D ≤ DIST − MARGIN — 92   NO

END OF LINE
Pi−I IS A CORNER
LET Po = Pi−I

YES

DIST = MAX (D, DIST)
EANG = ATAN (MARGIN/DIST) — 88
IF MINANG IS > ANG − ENG,
THEN
IF MAXANG < ANG + EANG,
THEN

## FIG. — II

*7/9*

## FIT ARCS

$i = 1$

$n = i + 3$; REFIT = FALSE

FIND 3 POINTS IN LIST OF CORNERS Pi, Pi+1, ···, Pn THAT ARE MAXIMALLY DISTANT FROM EACH OTHER. USE THE 3 POINTS TO TRIANGULATE LOCATING THE CENTER C AND RADIUS R OF THE CIRCLE. —112

110

$j = 1$

(R-MARGIN) $\leq$ DIST (Pjc) $\leq$ R + MARGIN — NO

100

102 — YES

(R-MARGIN) $\leq$ DIST ((Pj + Pj+1)/2, c) $\leq$ R+MARGIN — NO

104 — YES

$j = j + 1$ — NO — BACKTRACKING? — 106

YES

107 — $j > n$ — YES — REFINE THE ARC CENTER $n = j$; REFIT = TRUE; OLD J = j

108

NO

NO ACCEPTABLE ARC FOUND $i = i + 1$ — NO — REFIT?

YES

ARC IS FINAL, FROM CORNERS i TO OLD J, USING PREVIOUS C AND R. $i = $ OLD J

NOTE:    INPUT TO ARC FITTING IS THE LIST OF CORNERS PRODUCED BY EDGE FITTING. EACH CORNER Pi IS A 2D COORDINATE (X,Y) "MARGIN" AS IT APPEARS ABOVE. IS THE MAXIMUM PIXEL VARIANCE ALLOWED (SPECIFIED BY THE USER) "DIST (,)" IS A DISTANCE FUNCTION THAT COMPUTES THE DISTANCE BETWEEN THE Z GIVEN POINTS.

## FIG. —12

CLASSIFY FEATURES

**FIG.—13**

MATCH PROPOSALS AND VERIFICATION

START                                    STOP
                                              NO MORE

```
┌──────────────────────────────────────┐ ◄──────────┐
│   FOR EACH FEATURE CLASS (FC), IN     │            │
│   ORDER OF MOST PROMISING FIRST       │            │
└──────────────────────────────────────┘            │
150        │ MORE                                    │
           ▼                                         │
┌──────────────────────────────────────┐  NO MORE    │
│   FOR EACH IMAGE FEATURE ON           │ ──────────►│
│   THE FC'S LIST (CLASSIFIED)          │ ◄───────┐  │
└──────────────────────────────────────┘         │  │
152        │ MORE                                 │  │
           ▼                                      │  │
┌──────────────────────────────────────┐  YES     │  │
│   FEATURE ALREADY USED TO             │ ───────►│  │
│   RECOGNIZE AN OBJECT ?               │         │  │
└──────────────────────────────────────┘         │  │
154        │ NO                                   │  │
           ▼                                      │  │
┌──────────────────────────────────────┐  NO      │  │
│   FOR EACH PROTOTYPE FEATURE          │  MORE    │  │
│   ASSOCIATED WITH THE FC              │ ───────►│  │
└──────────────────────────────────────┘         │  │
156  ┌────────────────────────────────────┐      │  │
     │ COMPUTE PROTOTYPE IMAGE TRANSFORM  │      │  │
     └────────────────────────────────────┘      │  │
157        ▼                                      │  │
┌──────────────────────────────────────┐  NO      │  │
│   DO OTHER FEATURES CONFIRM           │ ───────►│  │
│   THE MATCH OF THE IMAGE              │         │  │
│   AND PROTOTYPE FEATURE PAIR ?        │         │  │
└──────────────────────────────────────┘         │  │
158        │ YES                                  │  │
           ▼                                      │  │
┌──────────────────────────────────────┐         │  │
│   VERIFY THE MATCH BY                 │         │  │
│   COMPARING ALL OF THE                │         │  │
│   PROTOTYPES EDGES WITH THE           │  NO      │  │
│   IMAGE EDGES. DO ENOUGH              │ ───────►│  │
│   OF THE PROTOTYPES EDGES             │         │  │
│   VERIFY ?                            │         │  │
└──────────────────────────────────────┘         │  │
160        │ YES                                  │  │
           ▼                                      │  │
┌──────────────────────────────────────┐         │  │
│   NOTE THE MATCH !                    │ ────────┘  │
│   OBJECT RECOGNIZED                   │            │
└──────────────────────────────────────┘            │
162                                                  │
```

FIG. — 14